# EUROPEAN PATENT APPLICATION

(11) **EP 2 210 779 A1**
(43) Date of publication of application: **28.07.2010**
(21) Application number: 10151321.6
(22) Date of filing: 21.01.2010
(51) Int. Cl.: B60R 9/10, B60R 9/06

(54) **Cycle carrier having a resiliently connected clamp standard**

(30) Priority: 23.01.2009 NL 2002449
(71) Applicant: Twinny Load B.V. i.o., 8161 PH Epe (NL)
(72) Inventor: Kosinski, Roman Karol Jan, 6951 GT Dieren (NL)
(74) Representative: Dokter, Hendrik Daniel

(57) **Abstract**

A cycle carrier (1) comprising:
- a frame (2), said frame including a standard support part (4); and
- at least one standard (20), connected to said standard support part, and comprising an elongate shaft (22) to which gripping means (24) configured for clamping a cycle are attached;
characterized in that it further comprises:
- a connection assembly, associated with the at least one standard, including a first resilient member (34) and being configured to provide a resilient connection between the standard (20) and the standard support part (4).

## Description

The invention relates to the field of vehicle mountable cycle carriers, and more in particular to a cycle carrier comprising:
- a frame, said frame including a standard support part; and
- at least one standard, connected to said standard support part, and comprising an elongate shaft to which gripping means configured for clamping a cycle are attached;

A cycle carrier of this type is known in the art. Often, it may be mounted on the towing hook or trailer coupling of a motor vehicle, such that the standard support part, e.g. a joist of the frame, extends in a horizontal plane. The standard typically extends from the standard support part in a substantially upright direction, whereby an end of the standard may be provided with the gripping means that are configured to clamp, for example, a frame tube or a crank of the cycle so as to secure it in an upright transport position. For more support, the frame of the cycle carrier may additionally include (cross)beams to support the wheels of a cycle from below.

In use, any acceleration of a motor vehicle carrying the cycle carrier, for example due to wilful speeding up or braking, taking a bend, wind gusts, bumps in the road or even motor vibrations, may put a load on the connection between the standard support part and the standard. This is because the connection forms a primary mechanical link between the cycle carrier and the cycle. It is essentially this link that transfers the motion of the motor vehicle on to the cycle. During ordinary use, a motor vehicle experiences continuously changing accelerations, for example originating from the sources just mentioned. Accordingly, the connection between the standard support part and the standard is subjected to a dynamical (i.e. continuously varying) load. It has been observed that such a load on the connection may give rise to fatigue cracks in the materials constituting the connection. These cracks may grow over time and eventually lead to a fracture, thus causing the connection to fail. It is understood that fatigue cracks are more likely to occur as heavier (and thus more inert) cycles are transported, e.g. electric bicycles that come equipped with electric drives and heavy accumulator packs.

A dynamic load similar to that experienced by the connection between the standard support part and the standard may also be exerted on a part of the bicycle that is engaged by the gripping means provided on the standard. This part of the cycle may typically be the primary, and sometimes even the only region of the cycle (frame) via which acceleration forces of the motor vehicle are transferred onto the cycle. Consequently, this part may suffer from dynamic loads in much the same way as the standard support part-standard connection, and likewise develop fatigue cracks due to sustained exposure to vibrations. This may lead to dangerous situations. For example, cycle frames may break during transport and come loose of the carrier, or break afterwards during use.

It is an object of the present invention to provide a cycle carrier wherein the connection between a standard support part and a standard is less prone to failure than in known cycle carriers, and wherein the part of the cycle engaged by gripping means provided on the standard is exposed less to vibrations that arise during transport.

To this end, the invention provides a cycle carrier of the above-referenced type, **characterized in that** it further comprises a connection assembly, associated with the at least one standard, including a first resilient member and being configured to provide a resilient connection between the standard and the standard support part.

In contrast to known cycle carriers, the standard support part and the standard of the cycle carrier according to the present invention are not solely connected by substantially rigid connection means, such as a weld or a rigid interlocking structure/coupling. Instead, the connecting structure is at least partially provided for by means of a resilient connection member that allows (limited) relative motion between the standard support part and the standard, and that cushions the forces, including vibrations and shocks, to which the connecting structure and an engaged part of a cycle are subjected. Accordingly, by replacing the rigid connection structure by a resilient one, the problem of material failure in both the connection and the part of the cycle engaged by the gripping means provided on the standard, due to exposure to dynamical loads is effectively resolved.

The resilient member can take many forms, such as, for example, a disc spring (Belleville washer), a coil spring, a conical spring, a volute spring, or simply a suitably shaped piece of a resilient material, such as rubber or a different elastomer. Indeed, in principle any suitably shaped body with resilient properties may serve as a resilient member as referred to above.

According to an embodiment of the invention, the connection assembly includes a passage in the standard support part through which passage the shaft of the standard extends

Especially when the shaft and the standard support part are at an angle close to 90°, such a connection configuration - resembling a mortise and tenon joint - is both simple and strong. It is noted that the standard support part, due to weight constraints on the cycle carrier, is preferably a hollow (instead of a solid) structure. With a view to such a construction, it is noted that the term 'passage' is not to be construed narrowly as merely encompassing a bore through a solid structure. Instead, the term intends to encompass any passage through which a shaft may extend, such as, for example, a transverse passage through an elongate, hollow beam, wherein the passage is defined by two aligned holes in opposite sides of the beam.

According to a further elaboration of the invention, the connection assembly may further comprise a first flange and a second flange, said first and second flange being spaced apart along the shaft of the standard, such that a portion of the shaft between the flanges extends through the passage in the standard support part. The first resilient member is provided between the standard support part and one of the first flange and the second flange.

The two flanges of the standard face opposite sides of the standard support part. This configuration enables them to serve as (part of) a clamp mechanism that reliably clamps the standard support part. Optionally, at least one of the flanges may be connected to the shaft of the standard. A connection between the shaft and a flange may be permanent or detachable. A permanent connection may, for example, be realized by means of welding, while a detachable connection may be formed with the aid of screws, bolts, nuts, locking pins, etc. In one embodiment, the flanges may be mutually connected, whereby only one of them is directly connected to the shaft. In another embodiment, neither of the flanges is (directly) connected to the shaft. When, for example, the two flanges are mutually connected and tightened towards each other, a rubber ring that snugly encircles the shaft and that is positioned in between one of them and the standard support part may be deformed such that it expands radially. Due to the radial expansion, the rubber ring may firmly contact the outer circumference of the shaft, thereby providing sufficient friction to fixate the shaft relative to the flanges.

In an embodiment of the invention, the connection assembly may further comprise a second resilient member, whereby the first resilient member extends at least partially between the first flange and the standard support part, and whereby the second resilient member extends at least partially between the second flange and the standard support part.

The two resilient members, which may abut and cushion the standard support part from opposing sides, may prevent any direct contact between the standard and the standard support part, such that all forces transferred from the standard support part, to the standard, and onto the cycle pass through the resilient members. Accordingly, the resilient members may dampen shocks and peak loads to which rigid connections within the connecting structure, such as a connection between a flange and the shaft, might be subjected.

According to a further elaboration of the invention, the connection assembly further comprises tightening means configured for connecting the first flange to the second flange and for tightening them towards each other with the standard support part in between. The tightening means may comprise at least one connection member that extends from the first flange to the second flange. A minimum radial distance between the connection member and the standard support part may vary depending on the rotational position of the shaft relative to the standard support part. In an advantageous embodiment, the minimum radial distance between the connection member and the standard support part varies from a minimum of 0 mm to a maximum in the range of 0.5 to 5 mm, more preferably 0.5 to 2 mm.

The connection member thus serves as a rotational stop, whereby the maximal minimum radial distance determines the extent to which the shaft may turn relative to the standard support part so as to provide rotational damping. The term 'radial' refers to the axis of the shaft.

According to an embodiment of the invention, at least one of the first and the second resilient member has an annular cross section defining an opening through which a portion of the shaft extends.

Such a configuration helps to keep the respective resilient member in place, and promotes the axial symmetry of the connection structure and its behaviour.

The above-described and other features and advantages will be more fully understood from the following detailed description, taken together with the accompanying drawings, which are meant to illustrate and not to limit the invention.

### Brief description of the figures

Fig. 1 is a perspective view of an exemplary vehicle mountable cycle carrier according to the present invention;
Fig. 2 is a partly exploded view of the connections between the standards and the standard support part as shown in Fig. 1;
Fig. 3 is a close-up perspective view of the assembled connections between the standards and the standard support part as shown in Figs. 1 and 2;
Figs. 4 and 5 are a top view and a side view, respectively, of the assembled connections as shown in Fig. 3; and
Figs. 6 and 7 are schematic side views of two exemplary alternative embodiments of the connection between a standard and a standard support part.

### Detailed description

In the drawings, identical reference numbers identify similar elements.

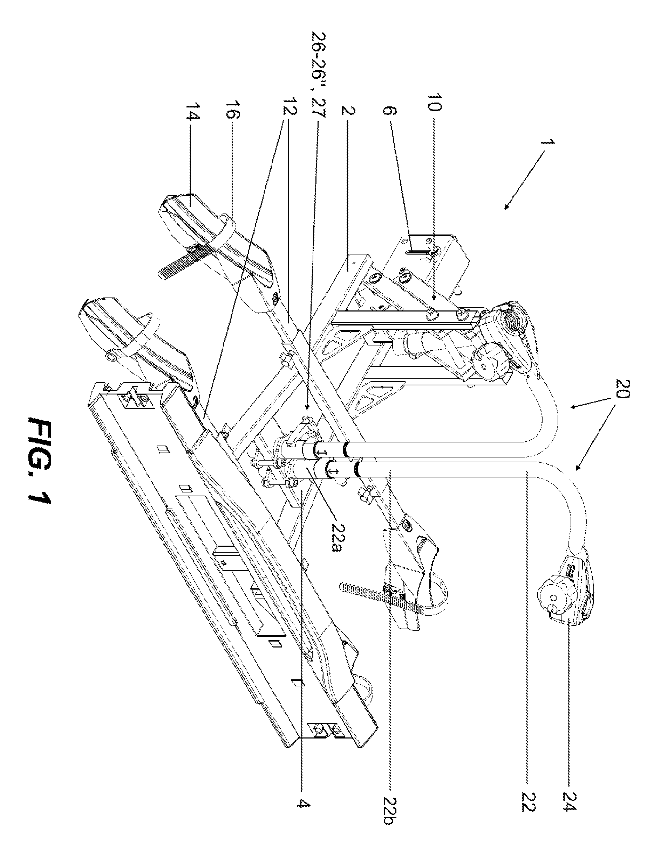

Fig. 1 is a perspective view of an exemplary vehicle mountable cycle carrier 1 according to the present invention. The cycle carrier 1 comprises a frame 2, including a standard support part 4. Preferably, the frame 2 is at least partially made up of hollow tubes and beams to minimize the weight of the cycle carrier 1. In the depicted embodiment, the standard support part 4 of the frame is formed by a (horizontal) joist, but in different embodiments said part may be formed by another structural member having a different shape, size and/or orientation. One end of the frame 2 may be provided with a towing hook attachment 6 that allows the cycle carrier 1 to be installed on the rear end of a motor vehicle. A second end of the frame may be provided with a light bar 8 that may hold a number plate and one or more taillight units.

The frame 2 may include a (parallelogram) lift structure 10, which may allow the frame part behind the towing hook attachment 6 to be raised and lowered so as to facilitate the loading and unloading of cycles on and off the cycle carrier 1. It is understood that the liftable frame part maintains its substantially horizontal orientation during lifting. The frame 2 may also include a number of crossbeams 12. Each of the crossbeams 12 may be provided with one or more wheel rails 14, for example one on either end of each beam. The wheel rails 14 may be configured for receiving the wheels of a cycle to be transported. To allow cycles of different sizes to be carried, the distance between a pair of wheel rails 14 on a single crossbeam 12 may be adjustable. Straps 16 may serve to hold the wheels in place.

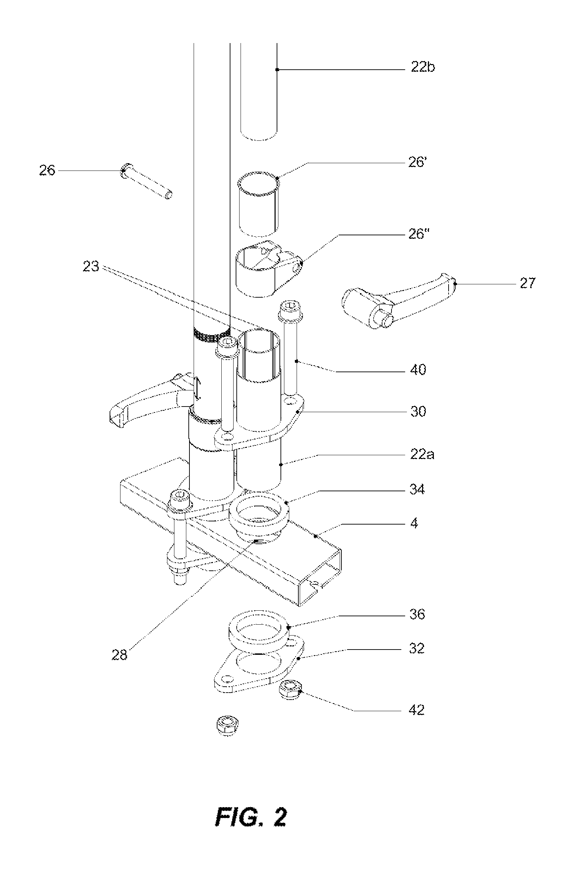

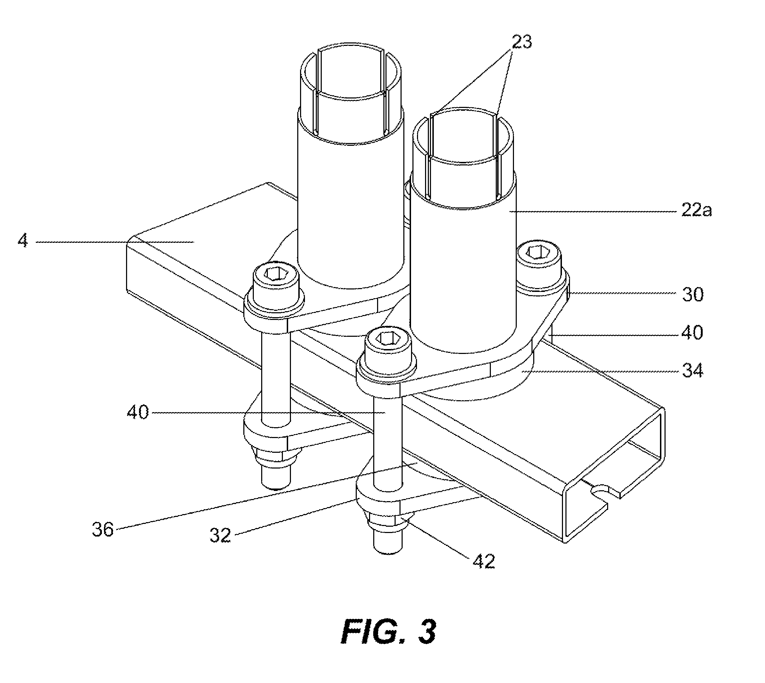

In the embodiment of Fig. 1 two standards 20 extend perpendicularly from the standard support part 4. The number of standards 20 and the mutual orientation of a standard 20 and the standard support part 4 may, of course, vary per embodiment. Each standard 20 comprises a shaft 22, which may comprise one or more, preferably hollow, pipe sections that may engage each other. In the depicted embodiment, a shaft 22 consists of a lower shaft section 22a and an upper shaft section 22b. The lower shaft section 22a has an internal diameter that exceeds an external diameter of the upper shaft section 22b, such that an upper part of the lower shaft section 22a can receive a lower part of the upper shaft section 22b. The upper part of the lower shaft section 22a may be provided with a number of longitudinally arranged slits 23 (see e.g. Fig. 2 and 3), which may be configured for cooperation with a clamp assembly 26, 26', 26", 27. The clamp assembly may include a pin 26, a bushing 26', a clamp 26" and a handle 27. When assembled, the clamp mechanism may be tightened or loosened manually using the handle 27, so as to enforce or relieve the mutual engagement of the shaft sections 22a, 22b. A shaft 22 may thus be taken apart into two sections 22a, 22b, which may facilitate the loading and unloading of cycles as it enables one to place a cycle with a pre-attached upper shaft section 22b onto the carrier, and vice versa.

At its lower end, a standard 20 may be connected to the standard support part 4 of the frame 2, while it may be equipped with gripping means for clamping a cycle at a higher end. In the embodiment of Fig. 1, the gripping means comprise a frame clamp 24 that is configured to engage the saddle tube of a cycle, i.e. the tube of a cycle frame that that extends between the saddle pin and the crank axle. Engagement of the saddle tube is advantageous as it allows for a stable grip on the cycle. This is partly due the fact that the center of mass of most cycles is located along the saddle tube. In other embodiments, the gripping means may be configured to engage different parts of a cycle, e.g. a different frame tube or a crank.

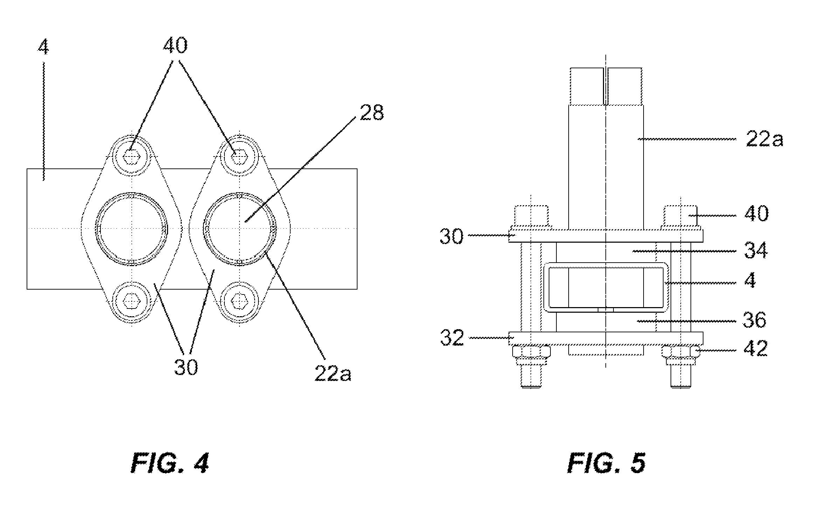

Figs. 2, 3, 4 and 5 illustrate the connection between a standard 20 and the standard support part 4 in more detail. Fig. 2 shows a partly exploded view of the connections between the standards 20 and the standard support part 4 as shown in Fig. 1. Fig. 3 is a close-up perspective view of the assembled connections, while Fig. 4 is a top view and Fig. 5 is a side view of the connections as shown in Fig. 3.

More in particular, Figs. 2-5 show a lower shaft section 22a extending through a passage 28 in the standard support part 4. The shaft 22 may be a hollow, tube like structure having a circular cross sectional profile. The non-angular profile may allow for some rotational freedom between the standard support part 4 and the shaft 22, which freedom may prevent torsional forces from (over)stressing the connection between them. Furthermore, the lower shaft section 22a may preferably have a diameter that is somewhat smaller than that of corresponding passage 28, so as to allow for a little play. The lower shaft section 22a is provided with a first, upper flange 30, and a second, lower flange 32. The two flanges 30, 32 face opposite sides of the rectangular, hollow standard support part 4. In the depicted embodiment, the first flange 30 is permanently connected to the lower shaft section 22a through a weld, while the second flange 32 would be moveable along the lower shaft section if it were not constrained by the tightening means 40, 42 that connect it to the first flange 30. The tightening means may comprise connecting bolts 40 and matching nuts 42, and are configured for connecting the first flange 32 to the second flange 34 and for tightening them towards each other with the standard support part 4 in between.

As illustrated, each flange 30, 32 may comprise a central hole through which the shaft 22 of the standard 20 may extend, and two smaller holes through which the connecting bolts 40 may extend. The smaller holes may be provided on opposite sides of each flange 30, 32. The distance between their centers may be such that the bolts 40 extending through them can stay clear of the vertical sides of the standard support part 4. The maximum radial clearance between the bolts 40 and the vertical sides of the standard support part 4 may preferably be in the range of 0.5 to 5 mm, and more preferably in the range of 0.5 to 2 mm. This clearance, in combination with the circular cross sectional profile of the shaft 22, may allow the shaft to rotate a little around its longitudinal axis, relative to the standard support part 4. The maximum amount of radial clearance determines the angle through which the shaft may rotate. Once one of the connecting bolts 44 contacts a vertical side of the standard support part 2, a rotational motion is halted or blocked.

A first resilient member 34 may be provided between the first flange 30 and (an upper side of) the standard support part 4. Between the second flange 32 and (a lower side of) the standard support part 4, a second resilient member 36 may be provided. In the depicted embodiment, the resilient members 34, 36 are identical, rubber rings.

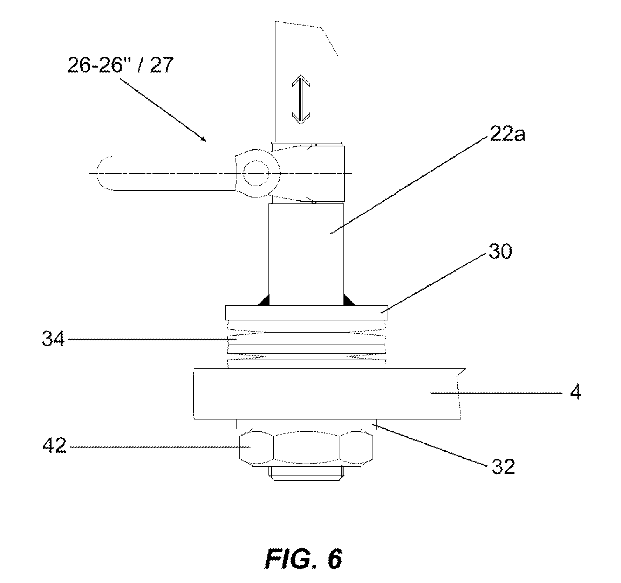

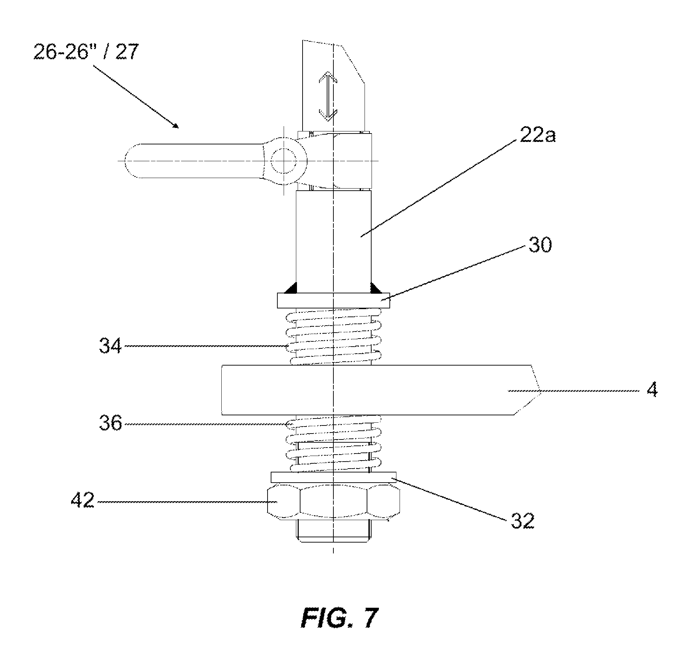

Figs. 6 and 7 illustrate a number of alternative embodiments of the connection between a standard 20 and a standard support part 4. Each figure shows the horizontally aligned hollow standard support part 4, and a lower shaft section 22a vertically extending through a passage (not visible) provided therein. As in the embodiment of Figs. 1-5, the lower shaft section 22a is provided with two spaced apart flanges 30, 32, which are located on opposite sides of the standard support part 4. In each case, the first flange 30 may be permanently fixed to the shaft 22, e.g. by means of welding. The second flange 32 may be formed by a ring that, in itself, is slideable along the shaft 22, but whose downward motion is restricted by a nut 42, which engages an outer thread provided on the shaft. It is noted that in some embodiments, the nut 42 may fulfil the role of (second) flange 32, such that an extra ring is superfluous. In the embodiment of Fig. 5, a first resilient member 34 in the form of a number of disc springs is provided in between the standard support part 4 and the first flange 30. No second resilient member is present in between the standard support part 4 and the second flange 32. In the embodiment of Fig. 6, both a first 34 and a second 36 resilient member are provided for in the form of a mechanical coil spring. Due to the adjustability of the position of the second flange 32 along the shaft 22 by means of the nut 42, the disc springs (Fig. 5) and the coil springs 34, 36 (Fig. 6) may be pre-loaded so as to set the stiffness of their spring action.

Although illustrative embodiments of the present invention have been described in detail with reference to the accompanying drawings, it is to be understood that the invention is not limited to these embodiments. Various changes or modifications may be effected by one skilled in the art without departing from the scope or the spirit of the invention as defined in the claims. These modified embodiments may be formed from a combination of described embodiments or elements thereof.

### List of elements

- 1: Vehicle mountable cycle carrier
- 2: Frame
- 4: Standard support part
- 6: Towing hook attachment
- 8: Light bar
- 10: Parallelogram lift structure
- 12: Crossbeam
- 14: Wheel rail
- 16: Strap

- 20: Standard
- 22: Shaft
- 22a: Lower shaft section
- 22b: Upper shaft section
- 23: Slits
- 24: Frame clamp
- 26: Various clamp assembly parts
- 27: Handle (of clamp assembly)
- 28: Passage through standard support part

- 30: First flange
- 32: Second flange
- 34: First resilient member
- 36: Second resilient member

- 40: Connecting bolt
- 42: Nut

## Claims

1. A cycle carrier (1) comprising:
- a frame (2), said frame including a standard support part (4); and
- at least one standard (20), connected to said standard support part, and comprising an elongate shaft (22) to which gripping means (24) configured for clamping a cycle are attached;
**characterized in that** it further comprises:
- a connection assembly, associated with the at least one standard, including a first resilient member (30) and being configured to provide a resilient connection between the standard (20) and the standard support part (4).

2. The cycle carrier according to claim 1, wherein the connection assembly includes a passage (28) in the standard support part (4), through which passage the shaft (22) of the standard (20) extends.

3. The cycle carrier according to claim 1 or 2, wherein the shaft (22) of the standard (20) has a substantially circular cross section.

4. The cycle carrier according to claim 2 or 3, wherein the connection assembly further comprises:
- a first flange (30) and a second flange (32), said first and second flange being spaced apart along the shaft (22) of the standard, such that a portion of the shaft between the flanges extends through the passage (28) in the standard support part (4); and
wherein the first resilient member (34) is provided between the standard support part and one of the first flange and the second flange.

5. The cycle carrier according to claim 4, wherein at least one of the first (30) and the second (32) flange is permanently fixed to the shaft (22).

6. The cycle carrier according to claims 4 or 5, wherein at least one of the first (30) and second (32) flange is moveably arranged along the shaft (22), allowing its position along the shaft to be varied.

7. The cycle carrier according to any of the claims 4-6, wherein the connection assembly further comprises:
- a second resilient member (36); and
wherein the first resilient member (34) extends at least partially between the first flange (30) and the standard support part (4), and wherein the second resilient member extends at least partially between the second flange (32) and the standard support part.

8. The cycle carrier according to any of the claims 4-7, wherein the connection assembly further comprises tightening means (40, 42) configured for connecting the first flange (30) to the second flange (32) and for tightening them towards each other with the standard support part (4) in between.

9. The cycle carrier according to claim 8, wherein the tightening means (40, 42) comprise at least one connection member (40) that extends from the first flange (30) to the second flange (32), and wherein a minimum radial distance between the connection member and the standard support part (4) varies depending on the rotational position of the shaft (22) relative to the standard support part.

10. The cycle carrier according to claim 9, wherein the minimum radial distance between the connection member (40) and the standard support part (4) varies from a minimum distance of 0 mm to a maximum distance in the range of 0.5 to 5 mm, more preferably 0.5 to 2 mm.

11. The cycle carrier according to any of the preceding claims, wherein at least one of the first (34) and the second (36) resilient member has an annular cross section defining an opening through which the shaft (22) extends.

12. The cycle carrier according to any of the preceding claims, wherein at least one of the first (34) and second (36) resilient member comprises an elastomer.

13. The cycle carrier according to any of the preceding claims, wherein at least one of the first (34) and the second (36) resilient member comprises a mechanical spring, e.g. a coil spring or a disc spring.

14. The cycle carrier according to claim 1, wherein the standard support part (4) comprises at least one opening, said opening being configured for at least partially receiving the shaft (22) of the standard (20), and said opening being lined with the first flexible member.
